# EUROPÄISCHE PATENTSCHRIFT

(11) **EP 2 121 444 B1**
(45) Veröffentlichungstag und Bekanntmachung des Hinweises auf die Patenterteilung: **23.04.2014**
(21) Anmeldenummer: 07856806.0
(22) Anmeldetag: 17.12.2007
(51) Int. Cl.: B64G 1/10, B64G 3/00, F41H 11/02, F41G 3/02

(54) **VERFAHREN, SATELLIT UND EIN SYSTEM BZW. EINE ANORDNUNG MIT WENIGSTENS EINEM SATELLITEN ZUR ERKENNUNG VON NATÜRLICHEN ODER KÜNSTLICHEN OBJEKTEN SOWIE DEREN VERWENDUNG ZUR DURCHFÜHRUNG DES VERFAHRENS**
METHOD, SATELLITE, AND A SYSTEM OR AN ARRANGEMENT WITH AT LEAST ONE SATELLITE FOR DETECTING NATURAL OR ARTIFICIAL OBJECTS, AND THE USE THEREOF IN THE EXECUTION OF SAID METHOD
PROCÉDÉ, SATELLITE ET SYSTÈME OU AGENCEMENT AVEC AU MOINS UN SATELLITE POUR IDENTIFIER DES OBJETS NATURELS OU ARTIFICIELS, ET LEUR UTILISATION POUR LEUR MISE EN OEUVRE DU PROCÉDÉ

(30) Priorität: 18.12.2006 DE 102006060091
(43) Veröffentlichungstag der Anmeldung: 25.11.2009
(73) Patentinhaber: OHB Orbitale Hochtechnologie Bremen-System AG, 28359 Bremen (DE)
(72) Erfinder: HOFSCHUSTER, Gerd, Dr., 80993 München (DE); MAHAL, Sascha, 28359 Bremen (DE); KASSEBOM, Martin, 28209 Bremen (DE)
(74) Vertreter: Grape, Knut
(86) Internationale Anmeldenummer: PCT/EP2007/011070
(87) Internationale Veröffentlichungsnummer: WO 2008/074449

(56) Entgegenhaltungen:
- EP-A- 0 992 429
- DE-A1- 3 421 855
- US-A- 3 439 427
- RAYTHON COMPANY: "Raython Delivers Missile-Detection and tracking Sensors for U.S. Space program"[Online] 6. März 2006 (2006-03-06), XP002479674 El Segundo, California (US) Gefunden im Internet: URL:http://www.prnewswire.com/cgi-bin/micr o_stories.pl?ACCT=742575&TICK=RTNB&STORY=/ www/story/03-06-2006/0004314099&EDATE=Mar+ 6,+2006> [gefunden am 2008-05-08]
- MISSILE DEFENSE AGENCY: "Space Tracking and Surveillance System (STSS)" MDA FACTS, [Online] 30. Januar 2004 (2004-01-30), XP002479675 Gefunden im Internet: URL:http://www.nti.org/e_research/official _docs/mda/mda13004_stss.pdf> [gefunden am 2008-05-08]

## Beschreibung

Die Erfindung betrifft ein Verfahren, einen Satelliten und ein System bzw. eine Anordnung mit wenigstens einem Satelliten zur Erkennung von natürlichen oder künstlichen Objekten, insbesondere Flugkörpern und Satelliten, die sich in der Nähe eines Planeten, Planetoiden oder dergleichen Himmelskörper befinden, deren Verwendung zur Durchführung des Verfahrens sowie insbesondere eine Konstellation von LEO-Satelliten (LEO = Low Earth Orbit, niedrige Satellitenbahnen) zur Frühwarnung vor ballistischen Raketen, wobei diese Konstellation nur Satelliten auf Äquatorialbahnen bzw. Bahnen niedriger Inklination umfasst.

Um eine Überwachung, von militärischen oder anderen sicherheitsrelevanten Operationen und Aktivitäten im Weltraum, deren Ziel es sein könne, Satelliten zu stören oder zu zerstören, um eine Detektion von eventuellen Anti-Satelliten-Raumfahrzeugen oder anderen Weltraumaktivitäten zu ermöglichen, ist es erforderlich, über ein aktuelles Lagebild im erdnahen Weltraum zu verfügen. Solche Operationen können auch nur der Aufklärung dienen, ohne erstmal direkten Schalen anzurichten. Heutzutage ist es üblich, dafür bodengestützte Radaranlagen oder Teleskope zu nutzen. Abhängig von der Flugbahn eines Satelliten, kann es jedoch Tage dauern, bis dieser Satellit in den Sichtbereich eines solchen Detektionsinstrumentes gelangt. Bei optischen Teleskopen können zudem auch noch äußere Umstände, wie etwa Dunkelheit oder schlechtes Wetter, eine Detektion verhindern, zumindest erheblich beeinträchtigen.

Darüber hinaus ist eine Raketenfrühwarnung unter der Nutzung von Satelliten bekannt: Zu nennen ist hierbei zum Beispiel das US-amerikanische Defence Support Program DSP, das Satelliten im geostationären Orbit verwendet. Im Rahmen des US-amerikanischen Nachfolgeprogramms Space Based Infrared System SBIRS wurden ein Projekt SBIRS-High mit geostationären Satelliten und ein Projekt SBIRS-Low mit niedrig fliegenden Satelliten aufgelegt. Das Projekt SBIRS-High wurde zwischenzeitlich realisiert. Das Projekt SBIRS-Low ist jedoch wegen des Aufwands und wegen der Kosten (globales System) niemals über die Konzeptionsphase und experimentelle Phase hinausgekommen. Das Projekt SBIRS-Low soll nunmehr als Projekt Space Tracking and Surveillance System (STSS) entsprechend der Pressemitteilung der Raytheon Company: "Raytheon Delivers Missile-Detection and Tracking Sensors for U.S. Space Program", 6. März 2006, El Segundo, Kalifornien (USA), oder dem Artikel der Missile Defense Agency: "Space Tracking and Surveillance System (STSS)", MDA facts, 30. Januar 2004, seine Weiterführung finden.

Die Detektion kann in zwei unterschiedliche Aufgaben unterteilt werden, nämlich der Detektion einer oder mehrerer anfliegender Raketen in der Brennphase und der Verfolgung der ausgebrannten Raketen in der darauf anschließenden Freiflugphase.

Frühwarn-Satelliten im geostationären Orbit bieten vorteilhafte stationäre geometrische Bedingungen. Somit ist eine geringe Anzahl von Satelliten möglich. Von besonderem Nachteil ist dabei, dass durch die große Entfernung vom Satelliten zum Zielgebiet bzw. zum Zielobjekt die Anforderungen an die Detektionssensorik steigen. Ebenso sind große Raumtransportträger für die Plazierung der Satelliten notwendig.

Durch die geometrischen Verhältnisse muss ein geostationärer Satellit eine anfliegende Rakete aus großer Entfernung und vor dem natürlichen Strahlungshintergrund der Erde detektieren und von zivilen Verkehrsträgern oder anderen Wärmequellen unterscheiden. Die Verfolgung in der Freiflugphase mit geostationären Satelliten gilt als technisch nicht machbar.

Satelliten auf hochelliptischen Bahnen sind ähnlich komplex und aufwendig, wie GEO-Systeme (also geostationäre Satelliten), benötigen aber gegenüber diesen bereits eine erhöhte Anzahl von Satelliten.

LEO-Satelliten haben eine vergleichsweise geringe Entfernung zum Beobachtungsobjekt, was den Bau von kostengünstigen Kleinsatelliten ermöglicht. Nachteilig ist jedoch der geringe Überwachungs- bzw. Einsehbereich eines LEO-Satelliten, der sich aufgrund der Orbitmechanik nicht auf ein Gebiet fixieren lässt. Bisherige Konzepte benötigen für eine globale Einsatzfähigkeit typischerweise mehr als 20 oder gar über 30 Satelliten, wie zum Beispiel in der EP-A-0 992 429 beschrieben ist, die den nächstliegenden Stand der Technik im Sinne des Oberbegriffs der unabhängigen Ansprüche 1 und 16 offenbart. Diese Konzepte konnten auch bei einschränkung auf ein Interessensgebiet die Anzahl der notwendigen Satelliten nicht signifikant reduzieren, so dass beim Design einer Satellitenkonstellation automatisch eine globale Überwachungsfähigkeit vorgesehen wurde.

Darüber hinaus ist aus der US-A-3,439,427 ein Verfahren zum. Navigieren eines Raumfahrtzeuges bekannt. Demzufolge dient dieses Verfahren keiner Detektion bzw. Erkennung von natürlichen oder künstlichen Objekten, insbesondere Flugkörpern, die sich zudem in der Nähe eines Planeten, Planetoiden oder dergleichen Himmelskörper befinden. Es sollen vielmehr Lichtjahre entfernte Sterne zur Positionsbestimmung eines Raumfahrzeuges verwendet werden. Dabei basiert dieses Verfahren vor allem auf der Veränderung des atmosphärischen Brechungsindex und folglich der Höhe.

Der Erfindung liegt die Aufgabe zugrunde, ein Verfahren, einen Satelliten und ein System bzw. eine Anordnung mit wenigstens einem Satelliten zur Erkennung von Flugkörpern, die sich in der Nähe eines Planeten, Planetoiden oder dergleichen Himmelskörper befinden, zur Verfügung zu stellen, mit welchem sich die obigen Nachteile vermeiden lassen, welches/welcher mithin konstruktiv besonders einfach ist/sind und eine definierte, ausgesprochen zuverlässige sowie sehr zeitnahe (Früh-)Erkennung und/oder (Früh-)Warnung von Flugkörpern ermöglichen.

Diese Aufgabe wird in verfahrenstechnischer Hinsicht auf überraschend einfache Weise durch die Merkmale des Anspruchs 1 gelöst.

Die Ausgestaltung des erfindungsgemäßen Verfahrens zur Erkennung von natürlichen oder künstlichen Objekten, insbesondere Flugkörpern, die.sich in der Nähe eines Planeten, Planetoiden oder dergleichen Himmelskörper befinden, wobei mindestens ein Satellit auf einer Äquatorialbahn und/oder auf einer polaren Bahn um den Planeten, Planetoiden oder dergleichen Himmelskörper bewegt wird bzw. fliegt, wobei der mindest ens eine Satellit mit wenigstens einem Sensor ausgestattet ist, zeichnet sich dadurch aus, dass mindestens ein Satellit bzw. ein Ring von Satelliten auf einer äquatorialen Bahn zur Detektion von anfliegenden Raketen vorgesehen ist.

Ebenso kann derselbe Satellit zur Detektion weiterer Weltraumobjekte genutzt werden, insbesondere wenn sich diese auf einer niedrigen Erdumlaufbahn befinden.

Satelliten auf einer niedrigen Erdumlaufbahn, dienen zum Beispiel zur Erdbeobachtung, zur Aufklärung oder zur Satellitentelephonie. Diese Satelliten benötigen für einen Umlauf ungefähr eineinhalb Stunden. Dies bedeutet, dass alle Satelliten in niedrigen Bahnen im ungünstigsten Fall einer polaren Bahn spätestens nach ungefähr einem viertel Umlauf, also bereits nach ca. 25 Minuten, in das Sichtfeld des äquatorialen Rings gelangen und detektiert werden können. Diese Zeitdauer ist so kurz, dass praktisch keine militärischen Weltraumoperationen unbemerkt stattfinden können und dass ein ständig aktueller Katalog über alle aktiven und inaktiven Satelliten aufrechterhalten werden kann. Das System umfassend mindestens einen Satelliten, der mit wenigstens einem Sensor ausgerüstet ist, der/die es ermöglicht/ermöglichen, Raketen nur aufgrund ihrer thermischen Eigenstrahlung bzw. heisser Raketenabgasstrahlung zu detektieren und deren Bahn zu vermessen. Dementsprechend kann sich derselbe Sensor auch dazu eignen, Satelliten auf ihrer Umlaufbahn zu detektieren.

Das Erkennen von natürlichen oder künstlichen Objekten, insbesondere Flugkörpern, im Weltraum kann prinzipiell durch den Einsatz von Sensoren erfolgen. Dementsprechend wird dieses Verfahren auf der Erde und im Weltraum angewendet. Dabei können aktive oder passive Sensoren eingesetzt werden. Aktive Sensoren, wie beispielsweise Radargeräte, "beleuchten" das mögliche Zielobjekt und messen die Rückstrahlung der ausgesendeten Impulse. Passive Sensoren zeichnen sich dadurch aus, dass sie Signaturen, die mit dem Objekt verbunden sind, zum Beispiel deren elektromagnetische Abstrahlung detektieren und messen. Diese Messung kann in unterschiedlichen Wellenlängenbereichen erfolgen. Wichtig dabei ist, dass das Instrument so ausgelegt ist, dass mit der Messung das Objekt von dem Bereich, welcher das Objekt umgibt, zu unterscheiden ist. Möglichkeiten hierzu sind zum Beispiel eine Messung der Strahlstärke, eine Messung in ausgewählten Wellenlängenbereichen, eine Analyse der Bewegung, etc.

Die vorliegende Erfindung ermöglicht eine Frühwarnung vor startenden ballistischen Raketen für ein Beobachtungsgebiet in mittleren Breiten mit Hilfe einer zur Erdoberfläche tangentialen Blickrichtung mit Hilfe von wenigen Satelliten.

Die vorliegende Erfindung ermöglicht darüber hinaus die Vermessung der Flugbahn und die Voreinweisung von boden- und luftgestützten Sensoren.

Zusätzlich ermöglicht das Verfahren nach der Erfindung eine globale Weltraumüberwachung im Low-Earth-Orbit mit geringem Zeitverzug.

Weitere ausgesprochen vorteilhafte konstruktive Einzelheiten des erfindungsgemäßen Verfahrens sind in den Ansprüchen 2 bis 15 beschrieben.

So schlägt die Erfindung vor, nur ein sehr begrenztes Blickfeld (einige Breitengrade der Erde) zu überwachen. Dies ist dadurch möglich, dass die Satelliten von ihrer Bahn über dem Äquator aus tangential auf die Erde blicken. Ein begrenztes Blickfeld der Sensoren an Bord der Satelliten bedeutet eine geringere Datenmenge, die ausgewertet und/oder zur Bodenstation gefunkt werden kann. Diese reduzierte Datenmenge macht es auch sehr leicht, andere Beobachtungssatelliten als Relaisstation einzusetzen. Die Warnung vor einer erkannten Rakete kann dann ohne Verzögerung zur Erde gesendet werden, auch ohne unmittelbaren Funkkontakt zwischen der Bodenstation und dem Satelliten, der eine Rakete detektiert hat. Zudem wird die fliegende Rakete vom Sensor aus vor dem kalten Weltraumhintergrund gesehen, was ein hohes Signal-zu-Rausch-Verhältnis der Wärmestrahlung nach sich zieht und somit die Fehlalarmrate erheblich reduziert.

Eine sehr genaue Vermessung der Flugbahn einer fliegenden Rakete, kann durch die Beobachtung desselben Flugkörpers von zwei verschiedenen Orten, sprich von zwei Satelliten aus geschehen. Ein solches geometrisches Verfahren ist zum Beispiel Triangulation.

Steht zur Flugbahnverfolgung nur ein Satellit zur Verfügung, kann im Falle des LEO-Satelliten dessen Eigengeschwindigkeit relativ zur Erde von typischerweise 7 km/s genutzt werden. Bei mehreren Aufnahmen einer fliegenden Rakete zu verschiedenen Zeitpunkten, nimmt der Satellit das Zielobjekt jeweils von einem anderen Ort auf. Diese Informationen können wiederum in geometrischen Verfahren zur genauen Flugbahnbestimmung der Rakete genutzt werden.

Zur Optimierung kann die Höhe der verwendeten Satellitenbahn bzw. Satellitenbahnen je nach Bedrohungsszenario variiert werden. Typische Orbithöhen liegen zwischen 800 km und 2200 km.

Der Äquatorialring kann zur Freiflugphasenverfolgung von ballistischen Raketen mit polnahen Bahnen durch einen Polarring ergänzt werden. Dabei kann ebenso die tangentiale Beobachtungsgeometrie genutzt werden.

Diese Aufgabe wird in vorrichtungstechnischer bzw. anordnungsgemäßer Hinsicht auf überraschend einfache Weise durch die Merkmale der Ansprüche 16 bzw. 21 gelöst.

Weitere sehr vorteilhafte konstruktive Einzelheiten des erfindungsgemäßen Satelliten bzw. des erfindungsgemäßen Systems sind in den Ansprüchen 17 bis 20 bzw. 22 und 23 beschrieben.

Schließlich liegt es noch im Rahmen der Erfindung, den mindestens einen Satelliten und/oder das System nach Anspruch 24 zur Durchführung des Verfahrens nach der Erfindung in ausgesprochen vorteilhafter Weise einzusetzen.

Weitere Merkmale, Vorteile und Einzelheiten der Erfindung ergeben sich aus der nachfolgenden Beschreibung bevorzugter Ausführungsformen der Erfindung sowie anhand der Zeichnungen. Hierbei zeigen:
- Fig. 1: Eine schematische Darstellung einer Ausführungsform eines erfindungsgemäßen Verfahrens bzw. Systems anhand von Sichtlinien von mindestens zwei Satelliten auf einem äquatorialen Ring zu einer fliegenden ballistischen Rakete,
- Fig. 2: eine schematische Darstellung einer Blickrichtung von zwei Satelliten auf einem äquatorialen Ring entsprechend der Fig. 1 in Schräggeometrie,
- Fig. 3: eine schematische Draufsicht auf eine Vielzahl von Satelliten zur Ausrichtung der Satelliten eines Äquatorialringes auf die jeweiligen Zielgebiete,
- Fig. 4: eine schematische Darstellung einer weiteren Ausführungsform eines erfindungsgemäßen Verfahrens bzw. Systems anhand von Sichtlinien von mindestens zwei Satelliten auf einem Polring zu einer fliegenden ballistischen Rakete, kumulativ oder alternativ (nicht dargestellt) zu der Ausführungsform des erfindungsgemäßen Verfahrens bzw. Systems anhand von Sichtlinien von mindestens zwei Satelliten auf einem äquatorialen Ring, und
- Fig. 5: eine schematische Darstellung zur Erläuterung einer tangentialen Beobachtungsgeometrie eines Satelliten nach der Erfindung.

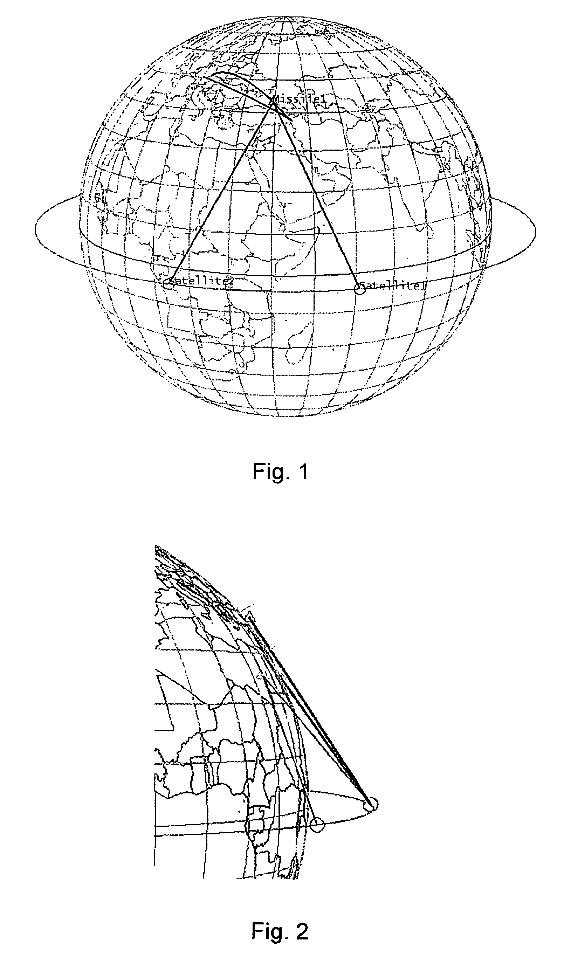

Wenn hier die Rede von einer Äquatorialbahn ist, dann ist damit eine Flugbahn von Satelliten gemeint, die entsprechend der Fig. 1 nahezu ausschließlich über dem Äquator oder einer zu dem Äquator nahen Bahn liegt. Diese Bahnen zeichnen sich dadurch aus, dass ihre Bahnebene gegenüber der Äquatorialebene nicht mehr als etwa ± 30°, insbesondere aber nicht mehr als etwa ± 5° bis 10°, geneigt ist. Dagegen bedeutet der Begriff polare bzw. polnahe Bahn eine Bahn, die senkrecht zur Äquatorialbahn oder senkrecht zu einer zu dem Äquator nahen Bahn steht, also sowohl über den Nord- wie auch über den Südpol verläuft. Im Folgenden wird eine Anwendung auf bzw. über der Erde beschrieben, es ist jedoch offensichtlich, dass die Erfindung, falls erforderlich, ohne weiteres auch für andere Planeten, Planetoiden oder sonstige Himmelskörper eingesetzt werden kann.

Derzeit müssen vor allem Länder der Erde überwacht werden, die im Verdacht stehen, ballistische Raketen oder sonstige Rüstungsprogramme zu entwickeln oder zu kaufen oder einzusetzen. Dies sind beispielsweise der Iran, Syrien, Nordkorea oder Pakistan. Diese Länder liegen auf einem gewissen Band; die geographische Breite dieser Länder ist ähnlich (etwa 24 Grad bis 44 Grad nördlicher Breite). Daher genügt es in der momentanen Praxis (Bedrohungslage), regional nur die Länder dieser Breitengrade zu überwachen.

Die Arbeitsweise der Erfindung wird anhand der Zeichnungen verdeutlicht.

In der Fig. 1 ist die Bahn (Äquatorialring) der Satelliten zu erkennen und deren Sichtlinie auf eine ballistische Rakete, die beispielhaft vom Iran in Richtung Deutschland abgeschossen wurde. Bei diesem Beispiel haben also zwei Satelliten gleichzeitig Sichtkontakt zu der Rakete und können entsprechend reagieren, etwa Warnsignale mit der Positionsangabe der Rakete zur Erde funken.

Dazu kann ein geostationärer Satellit als Relais-Station verwendet werden, falls die Überwachungssatelliten nicht ohnehin in direktem Kontakt zu Bodenstationen stehen. Alternativ ist es auch möglich, dass die Satelliten ständig Bildsignale (Wärmebilder etc.) zur Erde funken. Die in einer Basisstation auf der Erde empfangenen Bilder werden ausgewertet, d.h. nach Raketenmustern "durchsucht". Bei dieser Alternative kann die Bordelektronik der Satelliten einfacher gestaltet werden; die rechenaufwendige Auswertung erfolgt dann in der Bodenstation.

Überraschenderweise gelingt es beim Einsatz der Meßmethode der vorliegenden Erfindung, die Anzahl der Satelliten und damit die Kosten erheblich zu reduzieren. Zudem können einfachere und damit kostengünstigere Satelliten eingesetzt werden: Konventionelle Satelliten zur Raketenerkennung blicken "von oben" auf die Erde; die Satelliten der vorliegenden Erfindung jedoch blicken tangential knapp über die Erdatmosphäre.

In der Fig. 1 sind exemplarisch zwei Satelliten eines äquatorialen Rings eingezeichnet, sowie deren Sichtlinie zu einer fliegenden ballistischen Rakete.

In der Fig. 2 erkennt man, dass die Sichtverbindung zu der als Dreieck schematisch dargestellten ballistischen Rakete tangential an der Erde vorbei führt. Dadurch bietet sich den Satelliten als Hintergrundbild das Weltall, das in etwa mit einer Wärmestrahlung von lediglich 4 Kelvin strahlt. Eine Rakete hebt sich gegenüber diesem Hintergrund deutlich hervor: Entweder in der Brennphase durch die heißen Abgase oder durch die Temperaturstrahlung des Raketenkörpers. Somit wird die Fehlalarmrate deutlich reduziert, da hohe Signal-zu-Rausch-Verhältnisse realisiert werden können.

Im Gegensatz dazu blicken bei den Systemen aus dem Stand der Technik die Satelliten in Nadir-Geometrie (senkrecht auf den Erdboden) und sehen daher die Infrarotstrahlung der Erde. Die Fehlalarme dieser Ansätze haben Ihren Grund letztendlich auch darin, dass die Strahlstärke des Raketenkörpers in der Intensität der Hintergrundstrahlung der Erde ähnelt. Mit anderen Worten: Das System aus dem Stand der Technik weist ein wesentlich schlechteres Signal-zu-Rausch-Verhältnis auf und erfordert daher ausgesprochen aufwendigere und kompliziertere Messeinrichtungen an Bord des Satelliten.

Das System gemäß der Erfindung muss, wie bereits dargestellt, lediglich einen begrenzten geometrischen Bereich auf der Erde überwachen. Eine globale Überwachung (entlang aller Breitengrade) ist nicht notwendig. Dies bedeutet, dass auf rotierende Instrumente an Bord der Satelliten verzichtet werden kann. Dadurch können an Bord der Satelliten einfachere, starre Messvorrichtungen (Kameras oder Wärmesensoren), die für bestimmte Gebiete lediglich schwenkbar sein müssen, verwendet werden, was wiederum kostengünstig ist. Die Sensoren des Standes der Technik müssen ständig in Rotation gehalten werden; im Gegensatz dazu muss in der vorliegenden Erfindung lediglich dafür gesorgt werden, dass die starren Sensoren durch einfache Schwenkung beim überflug des Satelliten über das Zielgebiet auf dieses ausgerichtet werden.

So erlaubt das erfindungsgemäße Verfahren und dazugehörige System, mit Hilfe dreiachsstabilisierter Satelliten, die Sensoren auf das Beobachtungsgebiet auch während eines Über- bzw. Vorbeifluges kontinuierlich auszurichten.

Dazu kann die Lage des gesamten Satelliten während eines Vorbei- und/oder Überfluges kontinuierlich nachgeregelt we=den.

Alternativ oder auch kumulativ dazu ist es jedoch ebenso möglich, die Beobachtungsrichtung auch nur eine Verschwenkbarkeit des Instrumentes bzw. Sensors relativ zu dem Satelliten zu verändern.

Eine Ausrichtung kann einfach vom Satelliten selbst erfolgen, vorzugsweise durch Drallräder. Bei dieser bekannten Methode, wird die Ausrichtung des Satelliten, durch eingebaute Kreisel beeinflusst. Dabei wird je nach Bedarf die Drehzahl der Kreisel geändert. Der Vorteil dabei ist, dass die Lageänderung eines Satelliten keinen Treibstoff benötigt. Ein Satellit hat mit dem Verbrauch seines Treibstoffes auch das Ende seiner Lebensdauer erreicht. Nachdem auch die Masse eines Satelliten aus Kostengründen und weiteren Randbedingungen, wie zum Beispiel der Kapazität der Startrakete, sehr beschränkt ist, ist es vorteilhaft keine Lageregelungstriebwerke zu verwenden, da deren Betrieb mit Treibstoffverbrauch verbunden ist. Somit ist es eine sehr kostengünstige Möglichkeit, das vorgeschlagene Satellitensystem so zu realisieren und zu betreiben.

Wie man in der Fig. 1 ebenfalls erkennt, befinden sich die Satelliten in etwa auf einer Bahn über dem Äquator. Eine Besonderheit der Erfindung ist also, dass die Bahn der Satelliten nicht genau über den zu beobachtenden Breitengraden liegt: Durch die besondere Blickrichtung der Satelliten ist es in überraschender Weise möglich, mit Satelliten, die sich ausschließlich über dem Äquator bewegen, Regionen zu überwachen, die in den oben angegebenen Breiten von ca. 24 bis 44 Grad liegen.

Wie später noch beschrieben wird, können alternativ oder kumulativ Satelliten auf einer Bahn, die rechtwinklig zur Äquatorialbahn steht (also über Nord- und Südpol der Erde), eingesetzt werden.

Die Blickrichtung der Satelliten ist ein besonderes Charakteristikum der Erfindung und in der Fig. 2 dargestellt. Wie man erkennt, ist der Satellit auf einer Höhe (typischerweise 800 bis 3000 km über Erdoberfläche, besonders vorteilhaft im Bereich von 1000 bis 2500 km und besonders bevorzugt auf einer Höhe von 1100 bis 1800 km über der Erdoberfläche), die ihm einen Tangentialblick auf die entsprechenden Breiten (etwa 24 bis 44 Grad Nord) ermöglicht, so dass die Tangente der Sichtlinie des Satelliten die Erdoberfläche in diesen Breitengraden schneidet. Dabei muss unter Umständen die Erdatmosphäre berücksichtigt werden; man würde dann nicht an der Erdoberfläche entlang blicken, sondern - je nach Transmission (abhängig von den Wellenlängen der Strahlung der Rakete) - an der obersten Schicht der Atmosphäre oder an oberen Schichten der Atmosphäre, typischerweise über oberen Wolkenschichten (ab ca. 10 km über der Erdoberfläche für die Brennphase des Raketentriebwerkes bzw. der Triebwerke entsprechend sehr hoher Wärmeabstrahlung). Ab ca. 100 km Höhe ist mit keinen Störungen durch die Atmosphäre mehr zu rechnen, so dass spätestens dann auch der Raketenkörper selber mit seiner vergleichsweise geringen Wärmeabstrahlung detektiert werden kann.

In den Fig. 1 und 2 sind nur je zwei Satelliten gezeigt. Für ein System nach der Erfindung können unter Umständen jedoch ebenso mehr Satelliten eingesetzt werden (siehe unten).

Die in der Fig. 2 gezeigten Dreiecke stellen das Ziel der Detektion dar, also die Rakete. Da die Fig. 2 unterschiedliche Fälle darstellt, sind allerdings mehrere solcher Dreiecke gezeichnet.

Die Dreiecke stellen potentielle Flugkörper dar. Es ist zu erkennen, dass bei hohen geographischen Breiten, die äquatorialen Satelliten die Sichtverbindung zu den Flugkörpern verlieren. In diesem Fall können dann aber die Satelliten auf der Polarbahn die weitere Detektion übernehmen.

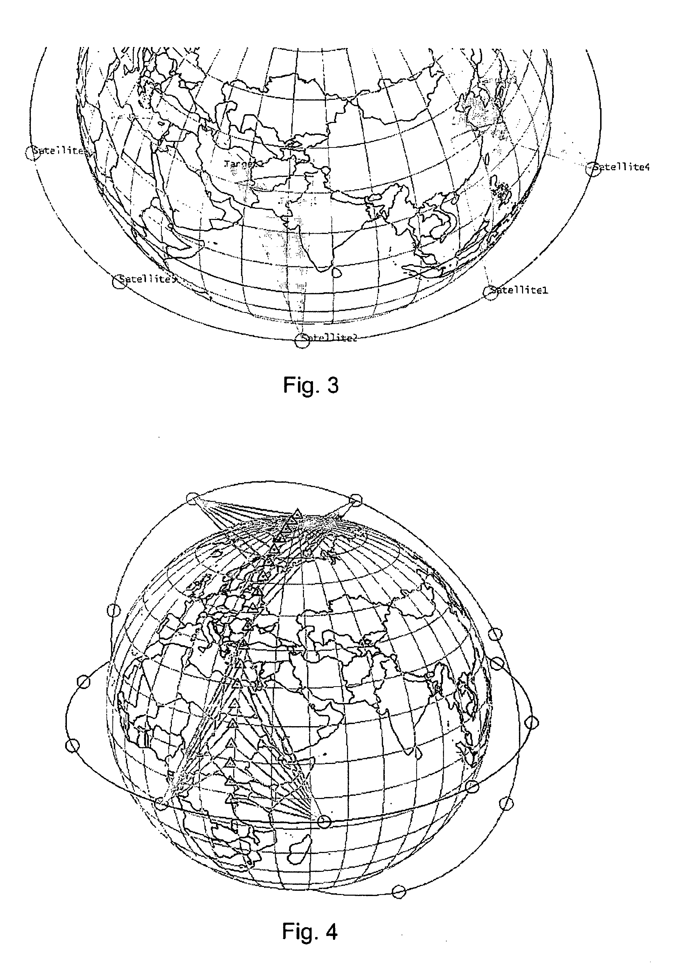

In der Fig. 3 sieht man verschiedene Satelliten eines Äquatorialrings, deren Sichtbereich auf mögliche Interessensgebiete ausgerichtet ist. Unter Umständen ist es möglich, dass ein Gebiet gleichzeitig von mehreren Satelliten überwacht wird.

Konventionelle zur Erdbeobachtung eingesetzte Satelliten blicken auf den Erdboden. Würde man einen solchen bekannten Satelliten so schwenken, dass er tangential auf die Erdoberfläche blickt, wäre zunächst mit Problemen zu rechnen, weil ein solcher Satellit auf den Wellenlängenbereich zur Detektion von ballistischen Raketen nicht optimiert ist. Selbst nach einer solchen Optimierung eignet sich die Auflösung eventuell nicht für den gewünschten Zweck. Besonders nachteilig am System des Standes der Technik ist aber, dass die Satelliten nicht schnell genug die Bilddaten zur Erde funken: Der konventionelle Satellit hat ein großes Blickfeld, wodurch seine Kameras große Datenmengen erzeugen. Dieser Satellit kann die Daten aufgrund ihrer Menge daher eventuell nicht selbst auswerten, sondern muss warten, bis er Funkkontakt zur Bodenstation erhält und dann die Daten senden kann. Dann kann es aber im Fall von Raketenwarnsystemen bereits zu spät sein.

Im Gegensatz dazu erlaubt die tangentiale Betrachtung der Erdoberfläche, wie durch die Erfindung vorgeschlagen, die Verwendung von Sensoren (optische Kamera oder Wärmebildkamera) mit einem sehr flachen Blickfeld. Dadurch verringert sich die vom Sensor erzeugte Datenmengen wesentlich.

Kleinere Datenmengen haben mehrere Vorteile: Ein Überwachungssatellit, der eine Rakete entdeckt, kann seine Bilddaten ohne Verzögerung zur Bodenstation funken, gegebenenfalls unter Verwendung der anderen Überwachungssatelliten, falls er gerade keinen direkten Funkkontakt zur Bodenstation hat. Die Beschränkung der Relais-Funktion auf kleinere Datenmengen erlaubt es, die Überwachungssatelliten einfacher auszustatten.

Weiterhin kann ein Überwachungssatellit auch selbst die Bilddaten auswerten, wenn diese nicht allzu umfangreich sind, und dann nur noch die Ergebnisse seiner Auswertung (Rakete ja/nein, ggf. Typ, Position, Flugdaten etc. der Rakete) an die Bodenstation übermitteln, wiederum eventuell unter Zuhilfenahme der anderen Überwachungssatelliten (oder anderer Kommunikationssatelliten) als Relais.

Ein wesentlicher Vorteil des Verfahrens nach der Erfindung ist auch, dass - aufgrund der niedrigeren Anzahl von Satelliten sowie der einfacheren Bordinstrumente der Satelliten - die auszuwertende Datenmenge kleiner ist und dadurch die Auswertungsvorrichtung (zum Beispiel in der Bodenstation) weniger komplex sein kann. Auch die Datenmenge (Bilder), die der Satellit zur Bodenstation funken muss, ist erheblich geringer, falls nicht ohnehin bereits der Satellit die Bilddaten auswertet und nur noch Ergebnisse (zum Beispiel die Position der erkannten Rakete) auf die Erde funkt.

Eine sinnvolle Anzahl von Satelliten zur Überwachung eines Gebietes beginnt mit ungefähr 6 Satelliten. Optimal ist eine Anzahl von etwa 10 Satelliten.

Optimierungen des Systems auf die jeweiligen Anforderungen können in der Anzahl der Satelliten, deren Flughöhe, oder auch durch Satelliten auf äquatorialen Bahnen auf unterschiedlichen Flughöhen bestehen. Je nach Höhe der verwendeten Bahnen können sich unterschiedliche Anforderungen an die Satelliten ergeben, da diese dann unterschiedlichen Strahlungsbelastungen ausgesetzt werden.

Die auf Frühwarnsystemen installierten Instrumente sind typischerweise Detektoren im infraroten Wellenlängenbereich. Je nach Aufgabe kann ein Bereich zwischen 2 und 20 Mikrometer gewählt werden. Hier sind unterschiedliche Wellenlängenbereiche in der Brenn- und Freiflugphase üblich. Eventuell kann das optische Instrument zusätzlich gekühlt werden, um seine Funktion zu gewährleisten.

Wird eine Rakete über die Pole verschossen bzw. führt die Flugbahn in hohe geographische Breiten, kann sie nicht mehr von einem auf einem Äquatorialring stationierten Satelliten detektiert werden. In diesem Falle ist es zweckmäßig, wenn ein Satellit in Polnähe vorhanden ist, der eine Detektion der Rakete übernimmt.

Wie in der Fig. 4 zu sehen ist, kann dies mit einem Ring von Satelliten auf einer polaren Bahn gewährleistet werden. So " ein polarer Ring kann auch die Relaisfunktion zur Datenweitergabe zur Bodenstation ermöglichen.

Zudem zeigt die Fig. 4, wie im Übrigen zuvor schon die Fig. 1, dass die einzelnen Satelliten individuell und beliebig verschwenkbar sind, und zwar relativ zueinander und/oder zu deren Bewegungsrichtung selbst. Während der rechte, vorlaufende Satellit der zwei einander benachbarten Satelliten eine Beobachtungsrichtung schräg nach hinten, d.h. nach links, aufweist, ist der linke, nachlaufende Satellit schräg nach vorne, d.h. rechts, ausgerichtet. Eine solche Verschwenkbarkeit lässt sich mittels dreiachsstabiliserten Satelliten, etwa durch Drallräder oder Kreiselanordnungen etc., erreichen. Infolge einer solchen Verschwenkbarkeit lassen sich die Einsatzmöglichkeiten des Verfahrens und Systems nach der Erfindung noch zusätzlich erhöhen und vielseitig sowie besonders variabel gestalten. Zudem kann die Anzahl von einzusetzenden Satelliten auf diese Weise ebenfalls kleingehalten oder sogar weiter vermindert werden.

Der Satellit ist in diesem Zusammenhang individuell, beliebig und je nach Anwendungsfall verschwenkbar ausrichtbar. Befindet sich der Satellit beispielsweise auf der Äquatorialbahn und ist in Richtung Norden ausgerichtet, egal ob nachlaufend oder vorlaufend, wie in den Fig. 1 und 4, kann der Satellit ohne weiteres aus der nördlichen Beobachtungsrichtung in eine südliche Beobachtungsrichtung verschwenkt werden, etwa weil beispielsweise ein Staat in Afrika oder Südamerika detektiert werden soll. Gleiches gilt uneingeschränkt für eine östliche bzw. westliche Beobachtungsrichtung, und umgekehrt, wie ebenso beliebige Kombinationen untereinander.

Der erfindungsgemäße Vorteil liegt in einer LEO-Satelliten-Konstellation, die sich auf die Detektion von Raketen, die aus mittleren geographischen Breiten gestartet werden, beschränkt. Die Verwendung von niedrig inklinierten Satellitenbahnen (Bahnen über dem Äquator) in Kombination mit einer schrägen Blickrichtung der Sensoren, ermöglicht einerseits eine erhebliche Reduktion der Anzahl von notwendigen Satelliten und andererseits eine Verwendung von starren, nicht rotierenden Sensoren.

Somit ergeben sich niedrige Gesamtkosten einer Konstellation, durch eine niedrige Anzahl notwendiger Satelliten, relativ einfacher Sensoren (Reduzierung der Clutter-Problematik, also der Unterscheidung eines Flugkörpers vor der Rückstrahlung des Hintergrundes) und niedriger notwendiger Datenbandbreite.

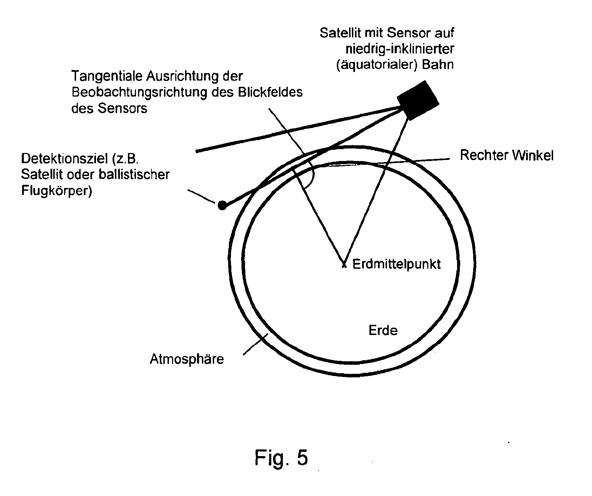

Anhand der Fig. 5 wird nachfolgend die tangentiale Beobachtungsgeometrie schematisch näher erläutert.

Ein Satellit befindet sich auf einer Bahn um die Erde über dem Äquator, insbesondere auf einer niedrig-inklinierten (äquatorialen) Bahn. Ein Sensor (nicht näher dargestellt), der an dem Satelliten angeordnet ist, wird so ausgerichtet, dass sein Blickfeld knapp an der Atmosphäre vorbei bzw. durch die oberen Atmosphärenschichten führt. Aus der Fig. 5 ist zu erkennen, dass das Beobachtungsinstrument radialsymmetrisch um die Achse zwischen Erdmittelpunkt und Beobachtungssatellit ausgerichtet werden kann. Dementsprechend kann die Beobachtungsrichtung des Sensors eine Nord- bzw. Süd-Komponente und eine Ost- bzw. West-Komponente haben. Folglich liegt das zu überwachende Gebiet mehr in mittleren geographischen Breiten (bei stark ausgeprägter Nord- bzw. Südausrichtung) oder mehr in Äquatornähe (bei stark ausgeprägter Ost- bzw. Westausrichtung).

Durch die tangentiale Beobachtungsgeometrie ist sichergestellt, dass keine Hintergrundstrahlung der Erde in das Instrument fällt und die Detektion eines Flugkörpers oder eines Satelliten stört. Somit wird ein hohes Signal-zu-Rausch-Verhältnis erreicht. Bei der Ausrichtung des Sensors ist aber darauf zu achten, dass keine lichtstarken Himmelskörper, wie zum Beispiel die Sonne oder der Mond, die Detektion erschweren. Dies könnte insbesondere dann auftreten, wenn die elektromagnetische Strahlung dieser Himmelskörper direkt in den Sensor gelangen kann. Eine mögliche Lösung liegt dann darin, den Beobachtungssatelliten so auszurichten, dass eine Ost-Richtungskomponente durch eine gleich große West-Richtungskomponente ersetzt wird bzw. umgekehrt.

Die Erfindung eignet sich auch zur Vermessung von Flugtests von Raketen in mittleren Breiten und zur Weltraumüberwachung.

Zur Verfolgung von ballistischen Raketen, deren Flugbahn nahe über die Pole führen, kann der Äquatorialring alternativ und/ oder kumulativ durch einen Polarring ergänzt werden.

Ballistische Raketen oder von Raketen abgetrennte Gefechtsköpfe (bzw. nur ein Gefechtskopf) müssen zur Erhöhung der Treffergenauigkeit in ihr Zielgebiet gesteuert werden. Im Vakuum des Weltraums wird dies im Allgemeinen durch kleinere Raketenantriebe bewerkstelligt. Zur Bahnanpassung von Satelliten wird im Allgemeinen dasselbe technische Prinzip verwendet.

Werden dazu Raketenantriebe mit heißen Gasen verwendet, dann ermöglicht die vorgeschlagene Konstellation eine Detektion dieser Raketengase mit Hilfe geeigneter Sensoren, zum Beispiel Infrarotsensoren. Diese Messergebnisse können dann zu einer verbesserten Bahnbestimmung einer ballistischen Rakete oder eines Satelliten verwendet werden.

Eine weitere Anwendung des erfindungsgemäßen Verfahrens und Systems liegt in der Bahnbestimmung von Objekten, die vom Vakuum des Weltraums in die Erdatmosphäre eintreten. Die dabei entstehende Reibungshitze erzeugt Leuchterscheinungen, die das System detektieren kann. Solche in die Erdatmosphäre eintretenden Objekte können natürliche Objekte, wie Meteore, oder künstliche Objekte, wie zum Beispiel ballistische Raketen, Gefechtsköpfe, Raumfähren oder Satelliten, sein.

Ein Spezialfall von in die Atmosphäre eintretenden künstlichen Objekte sind Tarn- und Täuschkörper. Diese werden um einen eintretenden Gefechtskopf verteilt, um einer Abwehrarchitektur, die Identifizierung des eigentlich gefährlichen Objektes, nämlich den Gefechtskopf, zu erschweren. Das vorgeschlagene erfindungsgemäße Verfahren und System kann mit Hilfe von Sensordaten eben zur Ermöglichung dieser Identifizierung beitragen.

Die vorliegende Erfindung ist nicht auf die dargestellten Ausführungsbeispiele beschränkt. So ist es möglich, das erfindungsgemäße Verfahren bereits mittels eines einzigen Satelliten auszuführen. Jede andere beliebige Anzahl von Satelliten ist darüber hinaus denkbar. Alternativ oder kumulativ kann eine Bodenstation auf dem Planeten, Planetoiden oder sonstigen Himmelskörper verwendet werden, die mit dem wenigstens einen Satelliten zusammenwirken kann. Weiterhin ist es denkbar, bei entsprechender Leistungsfähigkeit der Sensoren, auch alle Satelliten in anderen, unter Umständen höheren Orbits, trotz der eventuell größeren Entfernung zu den Satelliten des Äquatorialrings zu detektieren. Zudem könnte einer oder mehrere Satelliten des Äquatorialrings um Sensoren ergänzt werden, die nicht nur eine Detektion, sondern auch eine Analyse über Zustand des Zielobjektes ermöglichen. So können zum Beispiel Informationen über äußerlich sichtbare Instrumente, Werkzeuge, Schäden oder andere Eigenschaften gewonnen werden. Auch umfasst die vorliegende Erfindung die Verwendung mindestens eines Satelliten und/oder Systems zur Durchführung des erfindungsgemäßen Verfahrens.

## Patentansprüche

1. Verfahren zur Erkennung von natürlichen oder künstlichen Objekten, insbesondere Flugkörpern, die sich in der Nähe eines Planeten, Planetoiden oder dergleichen Himmelskörper befinden, durch mindestens einen Satelliten mit wenigstens einem Sensor, **dadurch gekennzeichnet, dass** der mindestens eine Satellit auf einer Äquatörialbahn oder einer zu dem Äquator nahen Bahn und/oder auf einer polaren Bahn oder einer zu einer zu dem Äquator nahen Bahn um den Planeten, Planetoiden oder dergleichen Himmelskörper bewegt wird bzw. fliegt und dass das Blickfeld des Sensors tangential auf den Planeten, Planetoiden oder dergleichen Himmelskörper ausgerichtet wird bzw. blickt.

2. Verfahren nach Anspruch 1, **dadurch gekennzeichnet, dass** der mindestens eine Satellit auf den Planeten, Planetoiden oder dergleichen Himmelskörper ausgerichtet wird und in seiner Bewegungsrichtung vor- und/oder nachlaufend verschwenkt wird.

3. Verfahren nach Anspruch 1 oder 2, **dadurch gekennzeichnet, dass** der wenigstens eine Sensor in Form einer Wärmebildkamera oder einer optischen Kamera auf den Planeten, Planetoiden oder dergleichen Himmelskörper ausgerichtet wird und in seiner Bewegungsrichtung vor- und/oder nachlaufend verschwenkt wird.

4. Verfahren nach einem der vorhergehenden Ansprüche, **dadurch gekennzeichnet, dass** eine Vielzahl von Satelliten, vorzugsweise mindestens 6 Satelliten, verwendet werden.

5. Verfahren nach einem der vorhergehenden Ansprüche, **dadurch gekennzeichnet, dass** der mindestens eine Satellit tangential auf die Erde ausgerichtet wird bzw. blickt.

6. Verfahren nach einem oder mehreren der vorhergehenden Ansprüche, **dadurch gekennzeichnet, dass** die Blickrichtung des mindestens einen satelliten tangential an der Erdatmosphäre entlang, insbesondere im Wesentlichen an der Erdatmosphäre vorbei und/oder durch die oberen Atmosphärenschichten der Erde, ausgerichtet wird.

7. Verfahren nach einem oder mehreren der vorhergehenden Ansprüche, **dadurch gekennzeichnet, dass** der mindestens eine Satellit auf den Planeten, Planetoiden oder dergleichen, Himmelskörper auf ein Gebiet ausgerichtet wird bzw. blickt, das in einem vorgegebenen Bereich geometrischer Breite liegt, vorzugsweise ein Gebiet mit einer Breite zwischen etwa 24 Grad Nord und 44 Grad Nord.

8. Verfahren, nach einem oder mehreren der vorhergehenden Ansprüche, **dadurch gekennzeichnet, dass** eine Vielzahl von Satelliten auf mehreren Aquatorialbahnen unterschiedlicher Höhe über dem Äquator des Planeten, Planetoiden oder dergleichen Himmelskörper bewegt wird bzw. fliegt.

9. verfahren nach einem oder mehreren der vorhergehenden Ansprüche, **dadurch gekennzeichnet, dass** anstelle oder zusätzlich zur Äquatorialbahn der mindestens eine Satellit oder weitere Satelliten auf einer polaren Bahn bewegt wird/werden bzw. fliegen, die über bzw. in der Nähe des Nord- und Südpol des Planeten, Planetoiden oder dergleichen Himmelskörper liegt.

10. Verfahren nach einem oder mehreren der vorhergehenden ansprüche, **dadurch gekennzeichnet, dass** der mindestens eine Satellit auf ein/en als eine Rakete, vorzugsweise als eine ballistische Rakete, ausgebildetes künstliches Objekt oder ausgebildeter Flugkörper ausgerichtet wird.

11. Verfahren nach einem oder mehreren der vorhergehenden Ansprüche, **dadurch gekennzeichnet, dass** ein künstliches Objekt oder ein Flugkörper von unterschiedlichen Orten aus detektiert wird.

12. Verfahren nach einem oder mehreren der vorhergehenden Ansprüche, **dadurch gekennzeichnet, dass** die Flugbahn eines künstlichen Objektes oder Flugkörpers von Aufnahmen von unterschiedlichen Orten aus vermessen wird.

13. Verfahren nach einem oder mehreren der vorhergehenden Ansprüche, **Dadurch gekennzeichnet, dass** ein künstliches Objekt oder Flugkörper, insbesondere eine fliegende Rakete, durch eine Vielzahl von Aufnahmen des mindestens einen, sich gegenüber dem Planeten, Planetoiden oder dergleichen Himmelskörper, insbesondere der Erde, bewegenden Satelliten detektiert wird.

14. Verfahren nach einem oder mehreren der vorhergehenden Ansprüche, **dadurch gekennzeichnet, dass** die Flugbahn eines künstlichen Objektes oder eines Flugkörpers durch eine Vielzahl von Aufnahmen des mindestens einen, sich gegenüber dem Planeten, Planetoiden oder dergleichen Himmelskörper, insbesondere der Erde, bewegenden Satelliten vermessen wird.

15. Verfahren nach einem oder mehreren der vorhergehenden Ansprüche, **dadurch gekennzeichnet, dass** die Detektion von dem bzw. den zu detektierenden Objekt/en in einem niedrigen Erdorbit durchgeführt wird bzw. sich das bzw. die zu detektierende/n Objekt/e in einem niedrigen Erdorbit befinden oder bewegen.

16. Satellit mit einer Einrichtung zur Erkennung von natürlichen oder künstlichen Objekten, insbesondere Flugkörpern, die sich in der Nähe eines Planeten, Planetoiden oder dergleichen Himmelskörper befinden, **dadurch gekennzeichnet, dass** der Satellit dazu geeignet ist, sich auf einer Äquätorialbahn oder einer zu dem Äquator nahen Bahn und/oder auf einer polaren Bahn oder einer zu einer zu dem Äquator nahen Bahn um den Planeten, Planetoiden oder dergleichen Himmelskörper zu bewegen bzw. zu fliegen und das Blickfeld des Sensors tangential auf den Planeten, Planetoiden oder dergleichen Himmelskörper auszurichten bzw. blicken zu lassen.

17. Satellit nach Anspruch 16, **dadurch gekennzeichnet, dass** die Einrichtung zur Erkennung eine Wärmebildkamera oder eine optische Kamera umfasst.

18. Satellit nach Anspruch 16 oder 17, **Dadurch gekennzeichnet, dass** die Einrichtung zur Erkennung so ausgebildet ist, dass sie tangential auf den Planeten, Planetoiden oder dergleichen Himmelskörper ausrichtbar ist bzw. blickt.

19. Satellit nach einem oder mehreren der Ansprüche 16 bis 17, **dadurch gekennzeichnet, dass** die Einrichtung zur Erkennung ein flaches Blickfeld aufweist.

20. Satellit nach einem oder mehreren der Ansprüche 16 bis 19, **dadurch gekennzeichnet, dass** die Einrichtung zur Erkennung einen vordefinierten Wellenlängenbereich, vorzugsweise im Infrarotbereich, abtastet.

21. System umfassend mindestens einen Satelliten nach einem oder mehreren der Ansprüche 16 bis 20.

22. System nach Anspruch 21 umfassend eine Bodenstation auf dem Planeten, Planetoiden oder dergleichen Himmelskörper.

23. System nach Anspruch 21 oder 22 umfassend mindestens einen geostationären Satelliten als Relaisstation.

24. Verwendung eines Satelliten und/oder eines Systems von Satelliten zur Durchführung des Verfahrens nach einem oder mehrere der Ansprüche 1 bis 15.

## Claims

1. Method for detecting natural or artificial objects, especially flying objects, which are in the vicinity of a planet, a planetoid or similar celestial bodies, by means of at least one satellite having at least one sensor, **characterised in that** the at least one satellite is moved or flies on an equatorial orbit or an orbit close to the equator and/or on a polar orbit or an orbit close to the equator around the planet, planetoid or similar celestial bodies and that the field of view of the sensor is directed or looks tangentially to the planet, planetoid or similar celestial bodies.

2. Method according to Claim 1, **characterised in that** the at least one satellite is aligned with the planet, planetoid or similar celestial bodies and is swivelled, leading and/or following, in its direction of movement.

3. Method according to Claim 1 or 2, **characterised in that** the at least one sensor in the form of a thermal imaging camera or an optical camera is directed to the planet, planetoid or similar celestial bodies and is swivelled, leading and/or following, in its direction of movement.

4. Method according to one of the preceding claims, **characterised in that** a plurality of satellites, preferably at least six satellites, is/are used.

5. Method according to one of the preceding claims, **characterised in that** the at least one satellite is aligned or looks tangentially to the earth.

6. Method according to one or more of the preceding claims, **characterised in that** the direction of view of the at least one satellite is aligned tangentially along the earth's atmosphere, in particular essentially past the earth's atmosphere and/or through the upper atmospheric layers of the earth.

7. Method according to one or more of the preceding claims, **characterised in that** the at least one satellite is aligned on or looks at the planet, planetoid or similar celestial bodies in an area that is in a predetermined area of geometric latitude, preferably an area with a latitude of between approximately 24 degrees north and 44 degrees north.

8. Method according to one or more of the preceding claims, **characterised in that** a plurality of satellites move or fly on several equatorial orbits at different altitudes above the equator of the planet, planetoid or similar celestial bodies.

9. Method according to one or more of the preceding claims, **characterised in that** instead of, or in addition to, the equatorial orbit, the at least one satellite or further satellites move(s) and/or flies/fly on a polar orbit which passes over or close to the north and south pole of the planet, planetoid or similar celestial bodies.

10. Method according to one or more of the preceding claims, **characterised in that** the at least one satellite is aligned on an artificial object or flying object designed as a missile, preferably a ballistic missile.

11. Method according to one or more of the preceding claims, **characterised in that** an artificial object or a flying object is detected from different locations.

12. Method according to one or more of the preceding claims, **characterised in that** the flight path of an artificial object or flying object is determined by pictures from different locations.

13. Method according to one or more of the preceding claims, **characterised in that** an artificial object or flying object, especially a flying rocket, is detected by a plurality of pictures of the at least one satellite moving relative to the planet, planetoid or similar celestial bodies, especially the earth.

14. Method according to one or more of the preceding claims, **characterised in that** the flight path of an artificial object or of a flying object is determined by a plurality of pictures of the at least one satellite moving relative to the planet, planetoid or similar celestial bodies, especially the earth.

15. Method according to one or more of the preceding claims, **characterised in that** the detection of the object(s) to be detected is carried out in a low earth orbit or the object(s) to be detected is/are located or moving in a low earth orbit.

16. Satellite having a device for detecting natural or artificial objects, especially flying objects, which are in the vicinity of a planet, a planetoid or similar celestial bodies, **characterised in that** the satellite is suitable for moving or flying on an equatorial orbit or an orbit close to the equator and/or on a polar orbit or an orbit close to the equator around the planet, planetoid or similar celestial bodies and that the field of view of the sensor is directed, or able to look, tangentially to the planet, planetoid or similar celestial bodies.

17. Satellite according to Claim 16, **characterised in that** the device for detection comprises a thermal imaging camera or an optical camera.

18. Satellite according to Claim 16 or 17, **characterised in that** the device for detection is designed so that it can be directed or look tangentially to the planet, planetoid or similar celestial bodies.

19. Satellite according to one or more of Claims 16 to 17, **characterised in that** the device for detection has a flat field of view.

20. Satellite according to one or more of Claims 16 to 19, **characterised in that** the device for detection scans a predefined wavelength range, preferably in the infrared range.

21. System including at least one satellite according to one or more of Claims 16 to 20.

22. System according to Claim 21, including a ground station on the planet, planetoid or similar celestial bodies.

23. System according to Claim 21 or 22, including at least one geostationary satellite as a relay station.

24. Use of a satellite and/or system of satellites for performing the method according to one or more of Claims 1 to 15.

## Revendications

1. Procédé pour reconnaître des objets naturels ou artificiels, en particulier des objets volants, qui se trouvent à proximité d'une planète, d'un planétoïde ou des corps célestes similaires, par au moins un satellite avec au moins un capteur, **caractérisé en ce que** ledit au moins un satellite se déplace ou vole sur une trajectoire équatoriale ou sur une trajectoire proche de l'équateur et/ou sur une trajectoire polaire ou sur une trajectoire proche de l'équateur autour de la planète, du planétoïde ou des corps célestes similaires, et **en ce que** le champ de vision du capteur est dirigé ou orienté tangentiellement vers la planète, le planétoïde ou les corps célestes similaires.

2. Procédé selon la revendication 1, **caractérisé en ce que** ledit au moins un satellite est orienté vers la planète, le planétoïde ou les corps célestes similaires, et est basculé en avance et/ou en retard dans la direction de son déplacement.

3. Procédé selon la revendication 1 ou 2, **caractérisé en ce que** ledit au moins un capteur sous la forme d'une caméra d'imagerie thermique ou d'une caméra optique est orienté vers la planète, le planétoïde ou les corps célestes similaires, et est basculé en avance et/ou en retard dans la direction de son déplacement.

4. Procédé selon l'une des revendications précédentes, **caractérisé en ce que** l'on utilise une pluralité de satellites, de préférence au moins six satellites.

5. Procédé selon l'une des revendications précédentes, **caractérisé en ce que** ledit au moins un satellite est orienté ou dirigé tangentiellement vers la terre.

6. Procédé selon l'une ou plusieurs des revendications précédentes, **caractérisé en ce que** la direction de vision dudit au moins un satellite est orientée tangentiellement le long de l'atmosphère terrestre, en particulier sensiblement à l'extérieur de l'atmosphère terrestre et/ou en traversant les couches atmosphériques supérieures de la terre.

7. Procédé selon l'une ou plusieurs des revendications précédentes, **caractérisé en ce que** ledit au moins un satellite est orienté ou dirigé vers la planète, le planétoïde ou les corps célestes similaires vers une région qui se trouve dans une zone prédéterminée de latitude géométrique, de préférence une région avec une latitude entre environ 24° nord et 44° nord.

8. Procédé selon l'une ou plusieurs des revendications précédentes, **caractérisé en ce qu'**une pluralité de satellites se déplacent ou volent sur plusieurs trajectoires équatoriales à des hauteurs différentes au-dessus de l'équateur de la planète, du planétoïde ou des corps célestes similaires.

9. Procédé selon l'une ou plusieurs des revendications précédentes, **caractérisé en ce que**, au lieu de ou en supplément d'une trajectoire équatoriale, ledit au moins un satellite ou d'autres satellites se déplace(nt) ou vole(nt) sur une trajectoire polaire qui passe au-dessus ou au voisinage du pôle nord et du pôle sud de la planète, du planétoïde ou des corps célestes similaires.

10. Procédé selon l'une ou plusieurs des revendications précédentes, **caractérisé en ce que** ledit au moins un satellite est orienté vers un objet artificiel ou un corps volant réalisé comme une fusée, de préférence comme une fusée balistique.

11. Procédé selon l'une ou plusieurs des revendications précédentes, **caractérisé en ce que** l'on détecte un objet artificiel ou un corps volant depuis des lieux différents.

12. Procédé selon l'une ou plusieurs des revendications précédentes, **caractérisé en ce que** l'on mesure la trajectoire de vol d'un objet artificiel ou d'un corps volant avec des prises de vue de lieux différents.

13. Procédé selon l'une ou plusieurs des revendications précédentes, **caractérisé en ce que** l'on détecte un objet artificiel ou un corps volant, en particulier une fusée en vol, au moyen d'une pluralité de prises de vue dudit au moins un satellite en déplacement par rapport à la planète, au planétoïde ou aux corps célestes similaires, en particulier à la terre.

14. Procédé selon l'une ou plusieurs des revendications précédentes, **caractérisé en ce que** l'on mesure la trajectoire de vol d'un objet artificiel ou d'un corps volant au moyen d'une pluralité de prises de vue dudit au moins un satellite en déplacement par rapport à la planète, au planétoïde ou aux corps célestes similaires, en particulier à la terre.

15. Procédé selon l'une ou plusieurs des revendications précédentes, **caractérisé en ce que** l'on exécute la détection de l'objet ou des objets à détecter dans une orbite terrestre basse, ou respectivement **en ce que** l'objet ou les objets à détecter se trouvent ou se déplacent dans une orbite terrestre basse.

16. Satellite comprenant un système pour reconnaître des objets naturels ou artificiels, en particulier des corps volants, qui se trouvent à proximité d'une planète, d'un planétoïde ou des corps célestes similaires, **caractérisé en ce que** le satellite est approprié à se déplacer ou à voler sur une trajectoire équatoriale ou sur une trajectoire proche de l'équateur et/ou sur une trajectoire polaire ou sur une trajectoire proche de l'équateur autour de la planète, du planétoïde ou des corps célestes similaires, et à orienter ou diriger le champ de vision du capteur tangentiellement vers la planète, le planétoïde ou les corps célestes similaires.

17. Satellite selon la revendication 16, **caractérise en ce que** le système comprend une caméra d'imagerie thermique ou une caméra optique pour la reconnaissance.

18. Satellite selon la revendication 16 ou 17, **caractérisé en ce que** le système de reconnaissance est réalisé de telle manière qu'il peut être orienté ou dirigé tangentiellement vers la planète, le planétoïde ou les corps célestes similaires.

19. Satellite selon l'une ou plusieurs des revendications 16 à 17, **caractérisé en ce que** le système de reconnaissance présente un champ de vision aplati.

20. Satellite selon l'une ou plusieurs des revendications 16 à 19, **caractérisé en ce que** le système de reconnaissance palpe une plage de longueurs d'onde prédéfinie, de préférence dans la plage des infrarouges.

21. Système incluant au moins un satellite selon l'une ou plusieurs des revendications 16 à 20.

22. Système selon la revendication 21, incluant une station au sol sur la planète, le planétoïde ou les corps célestes similaires.

23. Système selon la revendication 21 ou 22, incluant au moins un satellite géostationnaire à titre de station relais.

24. Utilisation d'un satellite et/ou d'un système de satellites pour la mise en oeuvre du procédé selon l'une ou plusieurs des revendications 1 à 15.
